# EUROPEAN PATENT APPLICATION

(11) **EP 1 221 659 A1**
(43) Date of publication of application: **10.07.2002**
(21) Application number: 01130559.6
(22) Date of filing: 21.12.2001
(51) Int. Cl.: G06F 17/30

(54) **Automatic image retrieval system**

(30) Priority: 28.12.2000 JP 2000404706
(71) Applicant: K.K. Asobou's, Tokyo (JP)
(72) Inventor: Katayama, Muneomi, Tokyo (JP)
(74) Representative: EGLI-EUROPEAN PATENT ATTORNEYS

(57) **Abstract**

For a user (viewer) to make an access to either or both of the picture server and the data server on the net, thereby having a picture data and a real-time data linked on a frame, and a desirable picture and a real-time data thereof viewed at a voluntary time.

There are arranged an automatic image retrieval system comprises a plurality of picture information such as a zoom picture and an overhead picture such as of a player in a sport game, a step of encoding them for transfer, and a picture server for storing the digitized picture data by using a net line, and a step of performing time-dependent inputs such as of the player's behavior and other information and transferring data thereof, and a data server for storing real-time data to be transferred by using the net line.

## Description

### BACKGROUND OF THE INVENTION

### 1. Field of the Invention

The present invention relates to a system for automatically retrieving an image from a wired or wireless net.

### 2. Description of Relevant Art

In an ordinary TV broadcasting, for example, in a sport relaying broadcast, a combination of picture signal and audio signal from a relay car at a relaying site is sent to a TV station by using microwaves, and a combination of picture and data from a master room in the station is always displayed on a frame irrespective of the taste of user (viewer), so that the user (viewer) is generally unable to make a choice of the picture and data.

### SUMMARY OF THE INVENTION

It therefore is an object of the present invention to provide a system which allows for a favorite scene of user (viewer) to be retrieved interactively on a wired or wireless net and instantaneously viewed on a PC or digital TV frame.

More specifically, the object of the invention resides in implementation of viewing a picture linked with a data, for example, allowing for one, without viewing an entirety (about three hours) of baseball game like the past, to make a choice at own taste, such as grasping the content of game, viewing a midnight game in daytime, viewing simply a picture of favorite player, or viewing merely a scene of home run.

According to the present invention, an automatic image retrieval system comprises a plurality of picture information such as a zoom picture and an overhead picture such as of a player in a sport game, a step of encoding them for transfer, and a picture server for storing the digitized picture data by using a net line, and a step of performing time-dependent inputs such as of the player's behavior and other information and transferring data thereof, and a data server for storing real-time data to be transferred by using the net line.

And a user (viewer) makes an access to either or both of the picture server and the data server on the net, whereby a picture data and a real-time data can be linked on a frame, and a desirable picture and a real-time data thereof can be viewed at a voluntary time.

It is noted that as the net line there may be used, not simply an ordinary Internet, but also a mobile "i-mode" such as a recent mobile telephone.

### BRIEF DESCRIPTION OF THE ACCOMPANYING DRAWINGS

Fig. 1 is a diagram of entire arrangement of an automatic retrieval system according to an embodiment of the invention;
Fig. 2 is an illustrative view of an input frame of a baseball;
Fig. 3 is an illustrative view of a data processing frame of the baseball;
Fig. 4 is an illustrative view of a flying condition of ball of the baseball;
Fig. 5 is an illustrative view of an output initial frame of the baseball;
Fig. 6 is an illustrative view of a retrieval frame of the baseball;
Fig. 7 is an illustrative view of an image linked with a data of the baseball;
Fig. 8 is an illustrative view of an initial frame for retrieval of a golf;
Fig. 9 is an illustrative view of a data processing frame of the golf;
Fig. 10 is an illustrative view of an image linked with a data of the golf;
Fig. 11 is an illustrative view of an initial frame of a soccer; and
Fig. 12 is an illustrative view of an image linked with a data of the soccer.

### DETAILED DESCRIPTION OF THE PREFERRED EMBODIMENTS

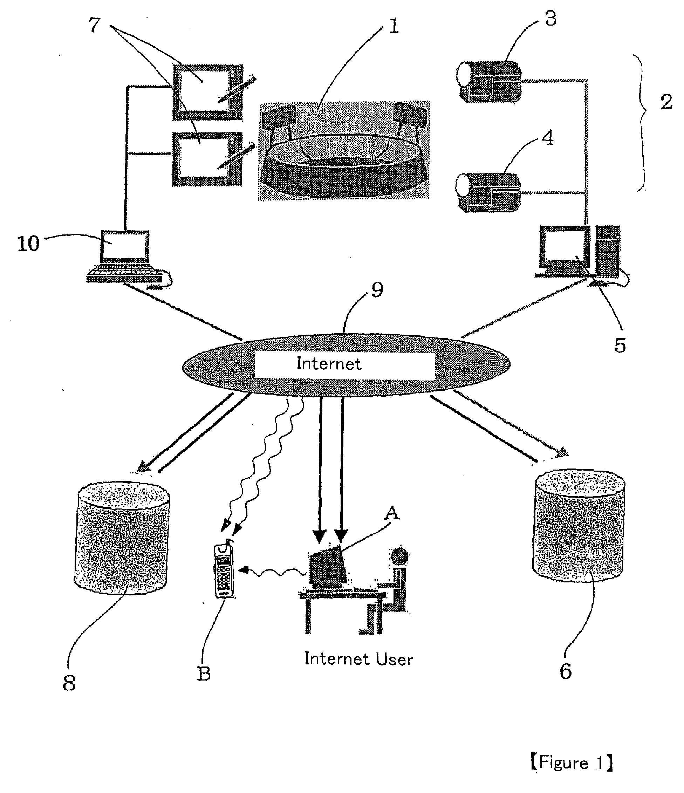

Description is now made of an embodiment of the present invention applied to a baseball. In Fig. 1, designated by reference character 1 is a baseball stadium, and 2 is a set of cameras, such as for a overhead picture 3 and a zoom wide picture 4, connected to an encoder 5 having a time compressing function, a multiplexing function, and a packet transmission function, including a digital disc recorder, a still image file apparatus, a frame synchronizer, etc. And, 6 is a picture server connected thereto via a net line 9.

The set of cameras 2 includes a plurality of cameras 2 to be provided, such as when relaying a sport program, for an overhead picture 3 to be picked up real on conditions as well as actions such as of respective players, and for a zoom wide picture 4 to be taken of a respective action and motion of a famous player.

Moreover, 7 is a terminal for inputting data on respective actions and motions of players, which is doubled herein for covering a so-called input miss to improve the exactness.

Still more, 8 is a date server adapted for storing data sent from the terminals 7 via a data transmitter 10 and the net line, and when necessary for storing the players' profiles and additional data (contents), as well.

The data server 8 includes a database server program having a master maintenance function, a terminal-end master updating function, a data retrieval function, and a retrieval result data transmission function, and a data convert program having an input data real-time display convert function, an input data file transmission reception function, a database updating function, and a master update file terminal transmission function.

The time compressing function employs characteristics of the existing protocol MPEG2 (Moving Picture Experts Group 2) for performing time compression of information to incorporate the data information into relayed information by combination such as of a link between time and picture as well as a link between time and data.

In other words, in the MPEG 2, frames are not decoded in their received order, and time-compressed frames fall within a group of I frames, a group of P frames, and a group of B frames prepared from the I and P frames for prediction.

For example, frames received as IBBP are decoded in the order of IPPB, such that as the P frame is initially calculated, the I frame is used for calculation of the two B frames, before use of a new I frame for preparing two B frames.

By use of the frame processing techniques, that is, by software for processing fundamental two data stream formats, there is allowed a packet multiples transmission, further by using TS (Transform Stream) packets, there is incorporated a text data with a closed caption for transmission to users (viewers) , so that the users (viewers) can select data at their preferences.

That is, in Fig. 1, designated by reference character A is a user's personal computer connected to the Internet 9, and adapted to retrieve information recorded and stored in the picture server 6 and the data server 8, whereas it recently is possible to perform a direct reading of information of the picture server 6 and the data server 8 via the Internet 9, such as by an "i-mode" using a mobile B such as a portable telephone.

Now, the terminal 7 is carried in the baseball stadium 1.

It also is now essential to carry the camera set 2. However, if the game was on a TV broadcast, this may be recorded instead, or else it may be input from a frame of the TV broadcast to the terminal 7, whereas it is essential to actually go to the stadium in the present case which requires discerning a quality of pitch such as a curve ball, slider ball, screw ball, or fork ball and batter's detail data.

Now, at a start of the game, the terminal 7 is powered on, and by concurrently interlocked cameras 2, there are input respective subsequent actions and motions of pitchers and batters.

In this case, input operations such as of called strike and ball are performed by a touch pen or the like, and thereafter, the quality of pitch and pitching position are displayed in a depicted strike zone.

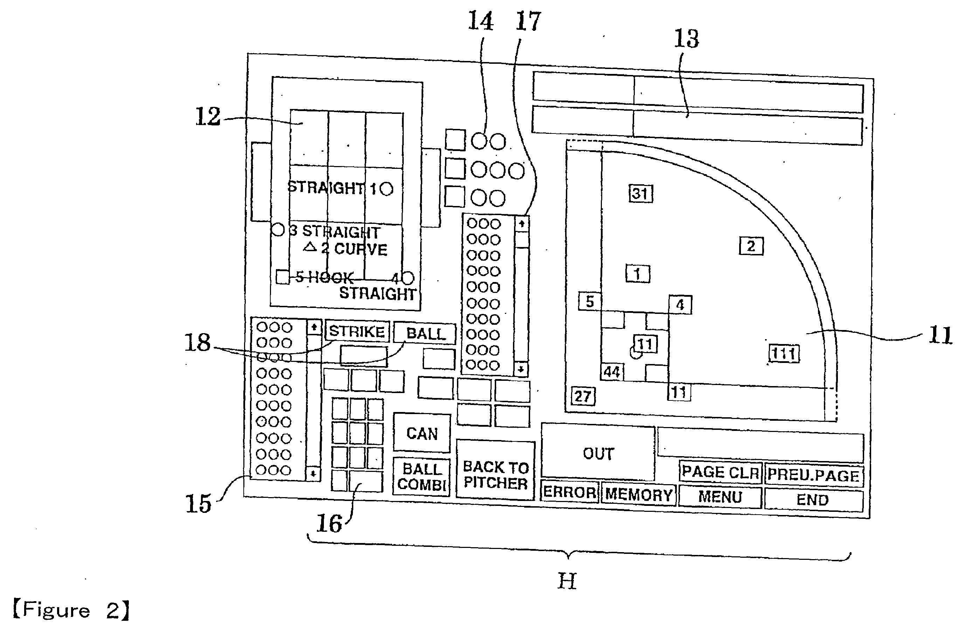

In other words, the present embodiment employs a data inputting method and means disclosed in the Japanese Patent Application No. 7-171280 filed in Japan, then filed to the U. S. A. and European countries, with patents granted and favorable comments given, which generally is illustrated in Fig. 2 showing an initial frame H indicated on a display at the terminal 7, where designated by reference character 11 is a figure of diamond indicated in a right central part thereof, 12 is a figure of strike zone indicated in a left upper part, 13 is a figure of score board indicated above the figure of diamond, 14 is an indicator of called strike, ball or out count between the figure of diamond 11 and the figure of strike zone 12, having therebelow a legend indicator 17 for indicating a number of kinds of batter's results.

Further, in left hand of the display, there are provided a pitch quality indicator 15 of a pitch from a pitcher, a legend indicator 18 of called strike and ball, and a numerical figure indicator 16 of elements 0 to 9 operable to input a speed of a pitch from a pitcher.

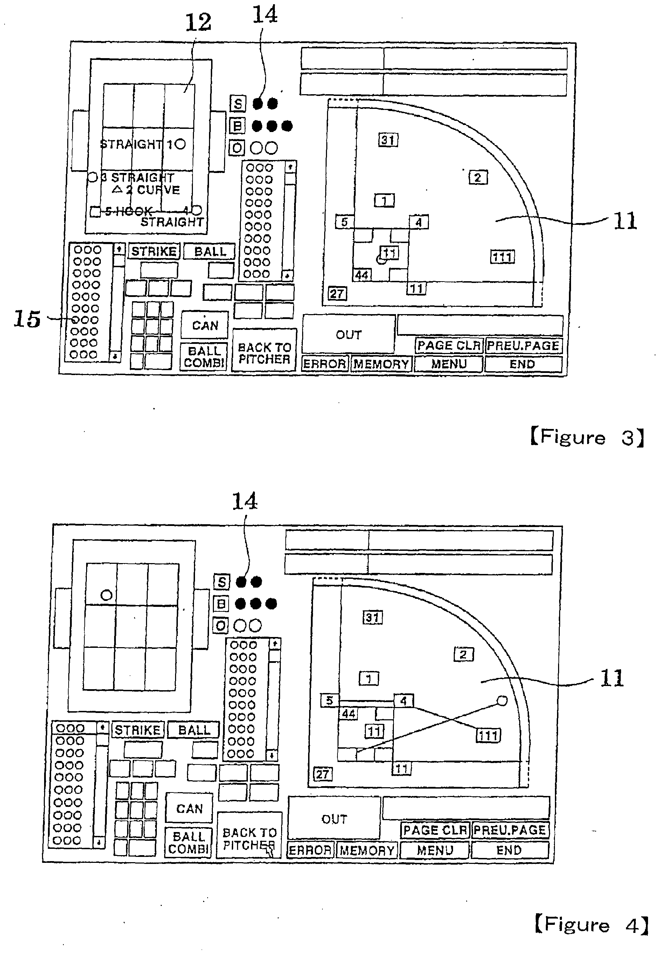

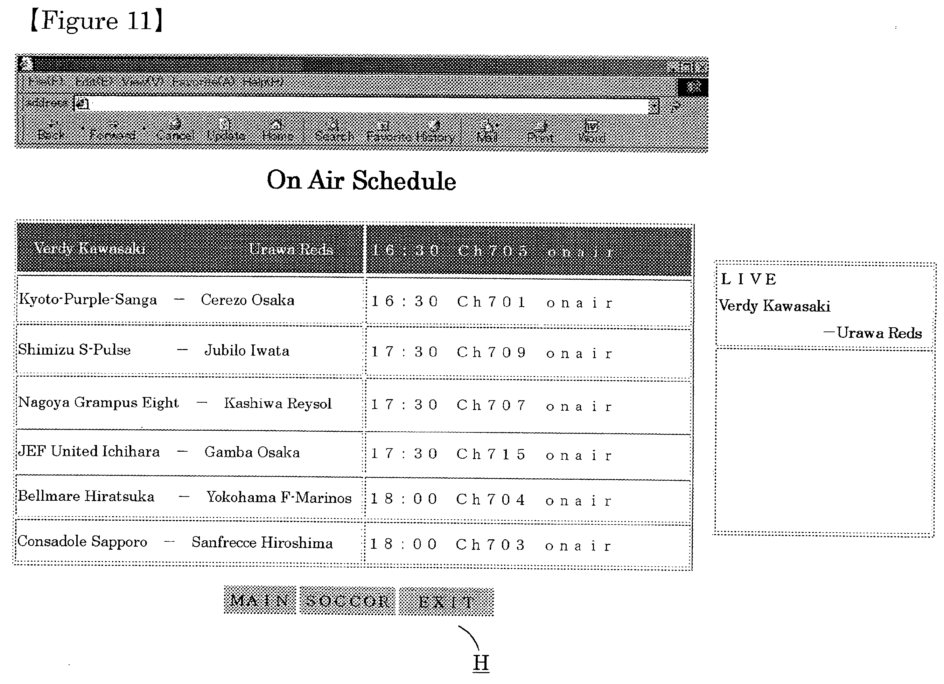

Next, description is made of an actual example of input means with reference to Fig. 3 et seq., in which Fig. 3 has a ball disposed at a pitcher as indicated by ○ mark on the figure 11 of diamond. It is noted that numerical figures in parentheses may preferably be indicated by the same figures as back numbers of actual players, as well as defendant, excepting that of a home base. Moreover, on the home base is provided an identical indication to the back number of a batter, and at the first, second, and third bases are indicated their respective runners' back numbers.

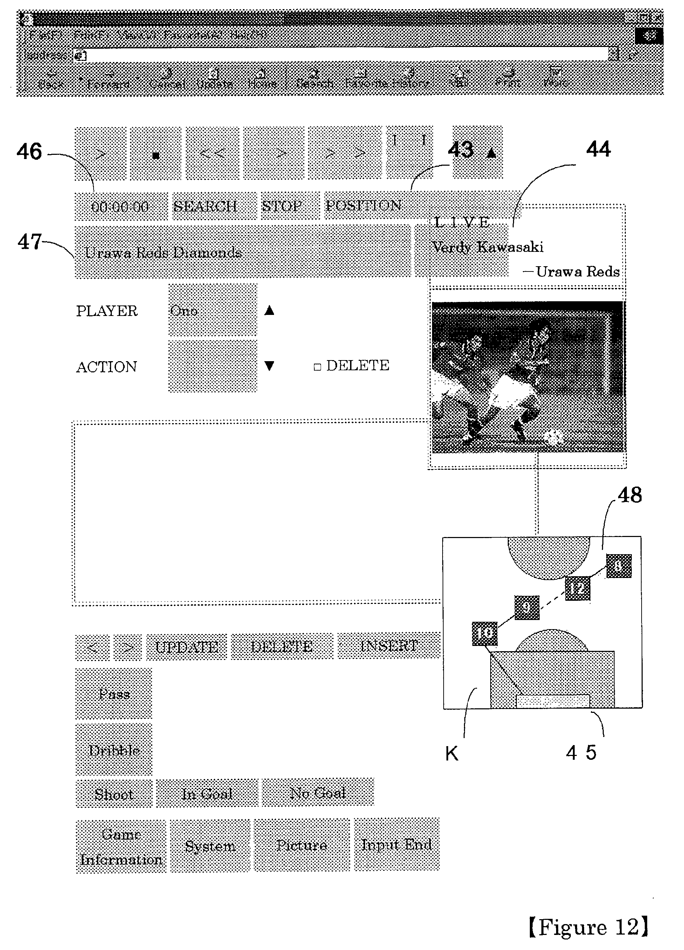

A pitcher has now thrown a first pitch. Then, a batter has let the pitch go, wherefor a position of the thrown pitch is indicated in the figure 12 of strike zone by the touch pen, and then if the quality of the pitch is "straight", a click is made to a legend "straight" of the pitch quality legend indicator 15. As a result, there are displayed in the figure 12 of strike zone the position of that pitch, the pitch quality thereof to be straight, and a legend "1" indicating that it was a first pitch, and concurrently, by a click to a legend "strike" in the strike/ball legend indicator 18, there is selected a legend "S" of the strike/ball/out indicator 14 to be displayed.

After repetition of such input operations, the batter has hit a three base after "three-two" as shown in Fig. 4. A click is then made to a position on the figure 11 of diamond where a batted ball has flown, whereby the locus of a straight hit is drawn from the home base to the position the batted ball has flown, in addition to that in the shown case, by inputting a condition that a return of the batted ball is made from a right position via second base to third base, there are drawn straight lines interconnecting them. As a result, as shown in Fig. 4, a runner having batted, that is, a back number of the runner (44 in this case) is located on the third base.

In actual game, a data input operation is made every action and motion of a respective player, wherefor an input means is described in an older application of the present inventor, and the description is eliminated herefrom, whereas resultant data are stored, as shown in Fig. 1, via the data transmitter 10 and the Internet line 9 into the data server 8, where they can be retrieved.

For that time, the cameras 2 are kept driven as a matter course, and data therefrom are stored via the encoder 5 and the Internet 9 into the picture server 6, where they are recorded. In this case, in particular such a case as of a homerun batter, it is preferable to use the camera 4 of zoom wide picture for having a strong appeal such as of a pitcher who frequently strikes out batters by a fork ball, and it additionally is desirable to exert ingenuity such as by use of the camera 3 of overhead picture in a scene such as of a homerun for concurrently showing both a batter having hit the homerun and a batted ball flying to an outfiled bleacher, in particular to make viewers interested in.

Specifically, the real taste of baseball resides first of all in the scene of a homerun. For example, for a user (viewer) having come home in haste when a game is already on the middle phase, with a score having been made by a homerun, it is anxious how the score was made.

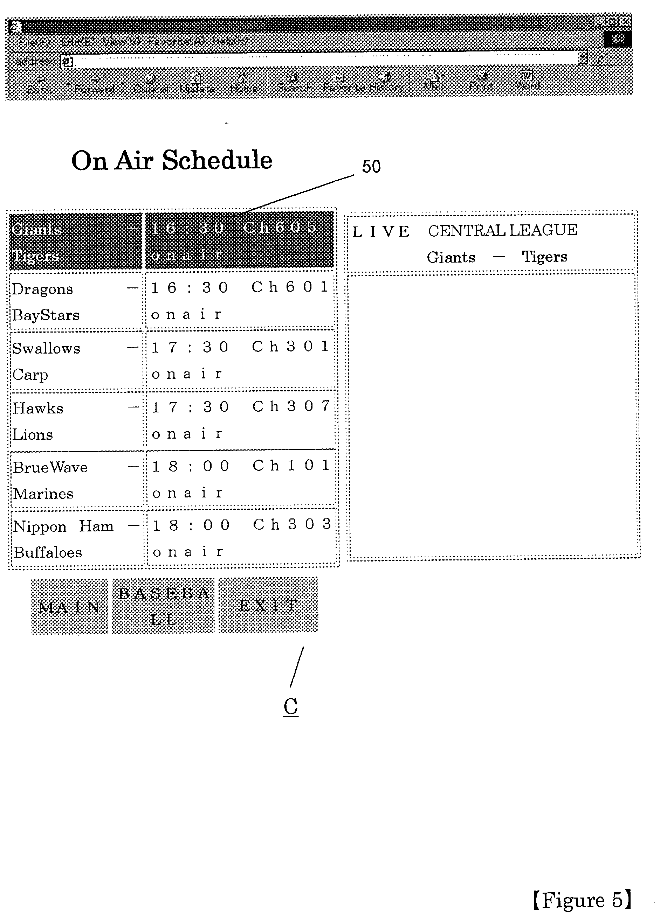

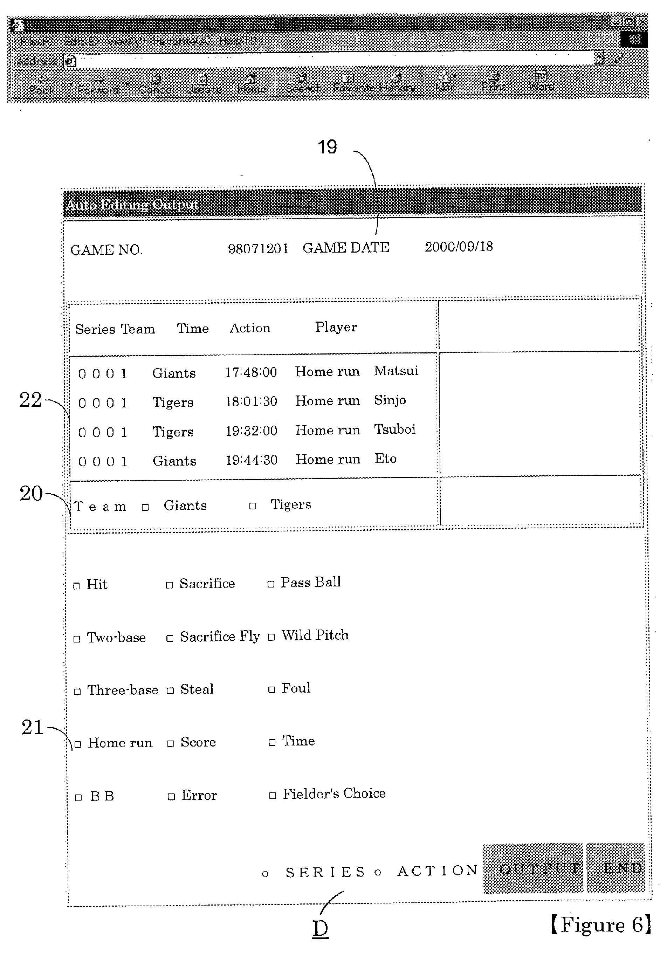

Accordingly, having returned home, he drives the personal computer A in Fig. 1, which first displays, as shown in Fig. 5, a match frame C of that date, where he clicks Giants vs. Tigers 50 for example, whereby a main menu D of Fig. 6 is displayed.

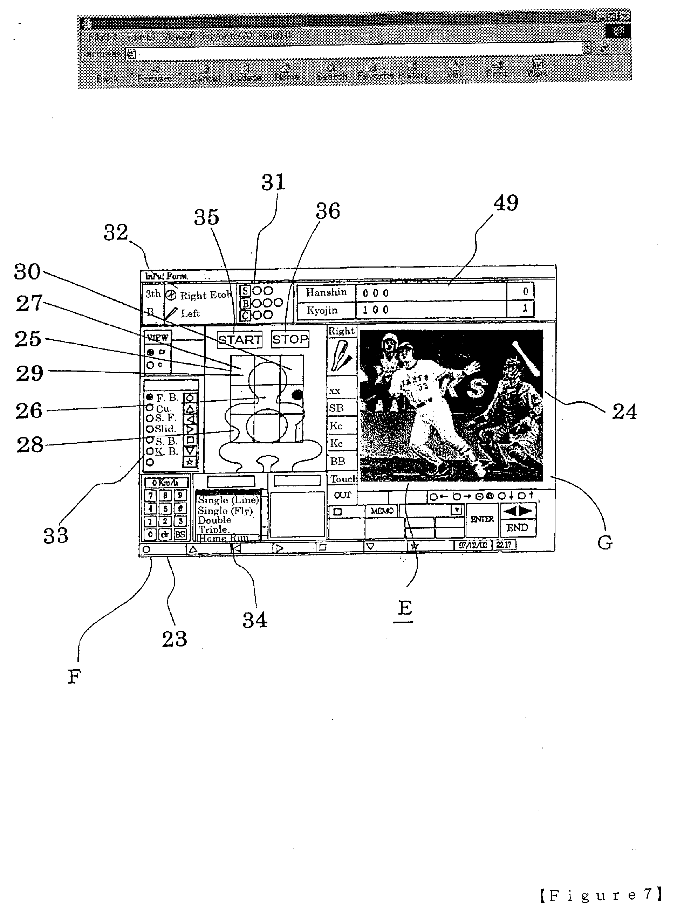

Then, supposing now the homerun scene the user (viewer) wants to see be in a match of Giants vs. Tigers made 16 o'clock 30 minutes on this date, he selects and clicks the date 19 and matched teams 20 of a menu D, then clicks a position of homerun 21, which displays on a subwindow 22 a list of names of batters who have batted homeruns on the day, and he additionally clicks a desirable player, whereby an image frame E of Fig. 7 is displayed, which indicates a data 23 and a picture 24.

In other words, the image frame E is constituted with a data display part F for displaying a data as result of an access the viewer has made via the Internet 9 to the data server 8 by using own personal computer A, and a picture display part G configured for following the access information to thereby automatically read from the picture server 6 a corresponding picture to be displayed.

The data display part F is configured on the other hand to display the figure 25 of strike zone, which divided into a planer lattice of nine segments, which indicates any pitch located outside the strike zone 25 to be called "ball" and, with respect to a central frame 26, an upper frame 27 to be "high", a lower frame 28 to be "low", a left frame 29 to be "outside" for right handed batters, and a right frame 30 to be "outside" for left handed batters, while all of these are within a so-called strike zone.

Further, in the image frame E, there are displayed at upper one side thereof a figure 49 of score board as of that time, at the other side thereof strike, ball, and out count indications 31 and batter names 32, at a left end thereof the legend indication 33 of qualities of pitches thrown by the pitcher, and at a lower one end thereof the indication 34 of a result of a batter.

As a start button 35 is now clicked, the figure 25 of strike zone is operated as it is adapted to automatically display all pictures from the time a batter having batted a homerun stood in a batter's circle to the time the homerun was batted, as well as data then experienced, such as that for example the homerun was after one strike and against a high screw ball, including all pitches until the batter hit, allowing for a mere glance to judge a pitcher to be facing the batter with "which location" or "what kind of ball", so that, different from a simple observation of game such as on a TV, it is possible for the viewer to look a picture with plenty of interests.

It is noted that, in the Figure, a stop button 36 may be clicked to allow observation of a picture as a still picture, and further when having returned to the main menu D, the homerun may again be double clicked for collecting whole data and pictures of homeruns on the day to be sequentially observed automatically.

Moreover, like those described, there can be observed together with pictures such records as two-base hits and three-base hits as well as errors else on the day or in the past, allowing observations of a form at the time a homerun was batted, to be as a reference, or of a condition at the time an error was made, to be as a material for reflection.

Although the embodiment described is addressed to a baseball game, the present invention is applicable, without limiting to baseball, to any and all matters, for example, tastes such as every sport, Go game, Shogi game, and fishing, and matches such as horse race and bicycle race, of which data may be known together with pictures to thereby give plenty of interests.

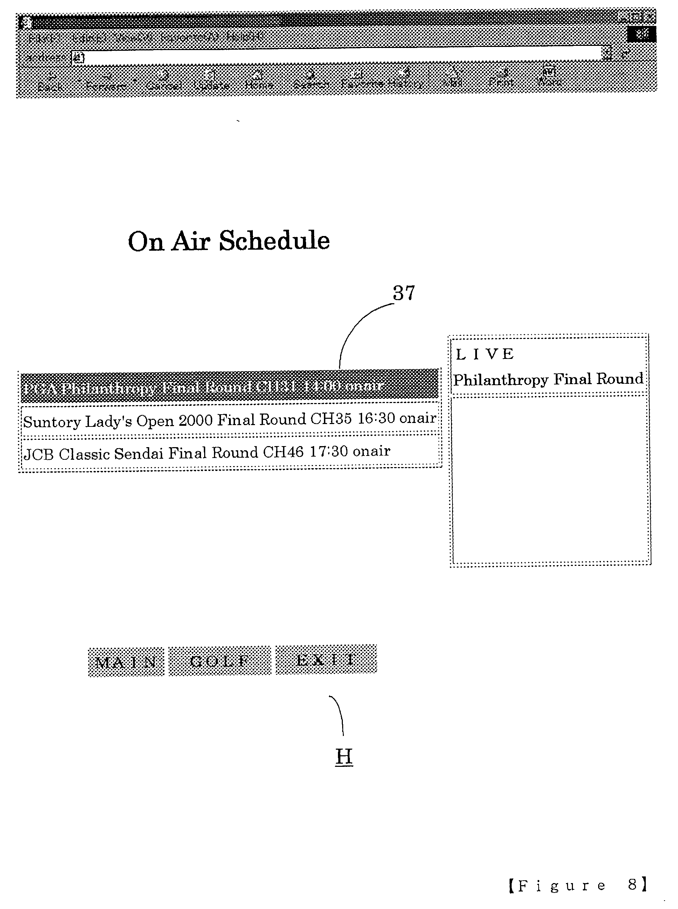

Fig. 8 is an initial frame H of golf, which displays golf plays 37 made on the day.

The real taste of golf resides first of all in an exciting driver shot, as well as a patter when at finish and a body action therefor. Any one that has observed a driver shot sending a 300 yard fly wants to take the form as a reference, and funs of a player want to observe attacking means of the player at all holes on the day.

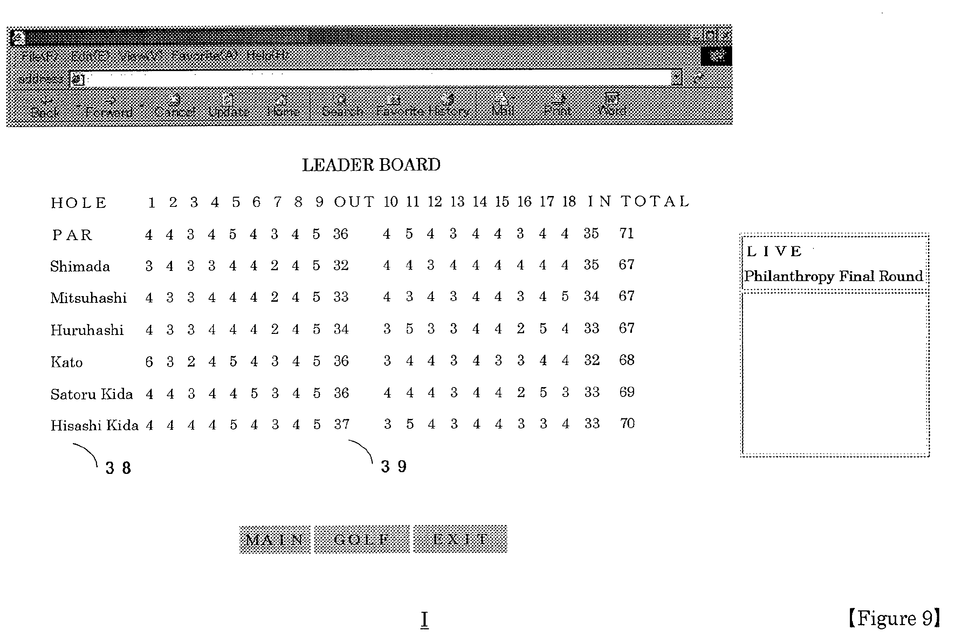

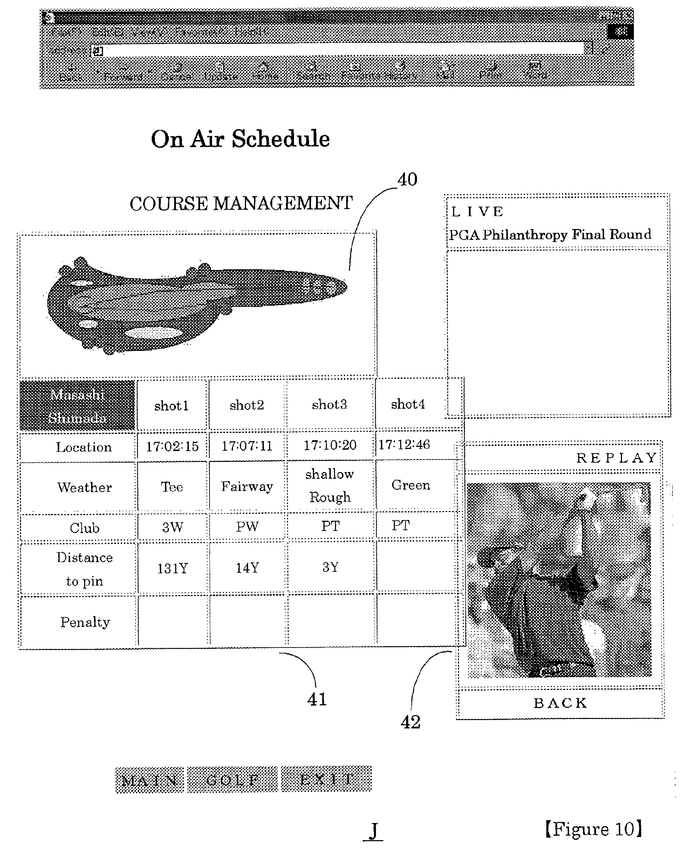

Accordingly, a desirable play 37 on the day is clicked for indication I of anticipating players 38 of a game on the day and their scores 39 as shown in Fig. 9, where a target player is clicked, thereby displaying an image frame J shown in Fig. 10.

The image frame J has at one side thereof a figure 40 of the course prepared in advance by using appropriate graphic software, and a score data 41 of the player at the time disposed therebelow, and at the other side thereof a picture 42 of the same player at the time. Of course, data therefor have been collected in advance by the terminal 7 or cameras 2 and stored to be recorded in the picture server 6 and the data server 8, where they are accessed from viewers via lines such as the Internet 9, as necessary.

Still further, Fig. 11 shows an initial frame H of soccer. The real taste of soccer resides first of all in a "shoot scene". Accordingly, like the case described, a match of "Verdy Kawasaki" vs. "Urawa Red Diamonds" played on the day is clicked, whereby a data frame K of Fig. 12 is displayed. That is, this frame K is adapted in the field of a soccer match to display necessary information from a start to an end of the match, and has at one side thereof a group of indicators 43 of necessary data, and at the other side thereof a picture 44 at the time in the upper part and a ground 45 in the lower part.

Such input keys may be selected as necessary, without limitation to depicted ones, and adapted to display at least the time 46 and team names 47 of match.

The depicted ground 45 is displayed as a half of an actual soccer ground, that is, a whole camp on an ally side from a center of the ground.

This is because, in soccer (like most ball team sports), the pattern of a team of various players is formed in dependence on the location of a ball, which belongs to a zone at the ally or opponent's side, whichever is sufficient to be displayed, whereas it may naturally be identical in configuration to actual ground.

The soccer is a game to be played between ally and opponent eleven players, and in Fig. 12, an initial kick pattern (player arrangement) at a start of game is shown by numerical figures 48.

It is noted that those figures 48 match to respective players to be input in advance, and such figures 48 are "touched" upon later-described output to output player names.

It is now supposed that an in-goal is scored by a player of back number "10". In this case, viewers may be greatly interested in if they can know how the progress to the in-goal was, together with a picture 44 thereof.

For example, in Fig. 12, there can be seen a progress in which a ball was passed from a player of No. "8" to a player of No. "12", dribbled by the player of No. "12" for pass to a player of No. "9", and passed from the player of No. "9" to the player of No. "10", resulting in the scored in-goal.

In this case, in order to show the ball being sequentially passed to the respective players, there are preferably marked as depicted on a ground K adequate means of "arrows" such that, in the case of a pass such as a so-called heading, the pass is indicated by solid line and, in the case of a pass by a dribble, the dribble is indicated by dot line, whereby an action of the player at the time as well as a flow of ball up to the pass is indicated, together with the picture 44, thereby having yet evoked interests.

According to the invention, in general, there can be achieved such effects that a favorite scene a user (viewer) wants to see can be interactively retrieved from a time common to a picture a data at the time has, that a picture wanted to see can be set to three or five minutes and a moving picture wanted to see can be instantaneously displayed, that from among whole pictures of a game for example mere scoring scenes of both teams can be taken for a quick grasp such as of a result, that a plurality of pictures having picked a plurality of players or single player at different angles can be taken to concurrently view the plural pictures, that pictures taken out can be processed to be recorded in a video deck as well as stored in a file of PC or in a server, that a new music or sounds can be added to the picture to be increased in value, that such pictures can be connected to have a continuity or compared by use such as of duality, that the pictures can have a thing or figure written or drawn thereon, and that such a picture or the picture processed as above-noted can be sent to a favorite place, and to an opponent terminal. It is noted that the opponent terminal means a terminal such as a PC or mobile terminal, and a mobile peer "i-mode" such as a recent mobile telephone can also be used as a matter of course.

## Claims

1. An automatic image retrieval system comprising
a plurality of picture information such as a zoom picture and an overhead picture such as of a player in a sport game, a step of encoding them for transfer, and a picture server for storing the digitized picture data by using a net line, and
a step of performing time-dependent inputs such as of the player's behavior and other information and transferring data thereof, and a data server for storing real-time data to be transferred by using the net line, wherein
a user (viewer) makes an access to either or both of the picture server and the data server on the net, and has a predetermined picture linked with a data to be output on an identical frame.
